# EUROPEAN PATENT APPLICATION

(11) **EP 3 375 751 A1**
(43) Date of publication of application: **19.09.2018**
(21) Application number: 16863717.1
(22) Date of filing: 08.11.2016
(51) Int. Cl.: B67B 1/00, G05B 19/00

(54) **SYSTEM AND METHOD FOR DUPLICATING LOCK-OPENING ELEMENTS**

(30) Priority: 10.11.2015 ES 201531616
(71) Applicant: JMA Alejandro Altuna, S.L.U., 20500 Arrasate-Mondragón (Guipúzcoa) (ES)
(72) Inventor: GARCÍA MADINAGOITIA, Iban, 20500 Arrasate-Mondragón (Guipúzcoa) (ES)
(74) Representative: Ungria López, Javier
(86) International application number: PCT/ES2016/070793
(87) International publication number: WO 2017/081344

(57) **Abstract**

Method and system for duplicating lock opening elements comprising a plurality of reading devices of the opening elements and generating digital codes of said opening elements, and means of communication with a remote server for sending the generated digital code to the remote server; the remote server in which the digital codes are stored; and at least one duplicating device of the opening element configured to receive the digital codes from the remote server through means of communication with the remote server and to duplicate each opening element based on the corresponding digital code received.

## Description

### OBJECT OF THE INVENTION

The present invention relates to a novel system and method for duplicating lock opening elements, such as keys, transponders and remote controls, based on the generation of digital codes corresponding to the opening means that each opening element incorporates (mechanical bitting, RF signals, security codes, etc.) through reading devices, and which are sent to a remote server (cloud) where they are stored. These digital codes are subsequently downloaded into duplicating devices in order to copy or duplicate the opening element. This creates a distributed system of duplication of these keys, transponders and remote controls, making it possible to duplicate the same at any time and without the need to have the original opening element on hand.

Furthermore, the present invention does not require the users (shops, hardware stores, etc....) to have a complete duplicating machine (which integrates the means for reading and duplicating) at each of their points of sale, in order to offer the duplicating service to the end customer. Thus, the system and method described herein enables the final cutting or engraving process of the opening element to be carried out in a single or few locations where expensive and complex duplicating devices are available, while a multitude of users can have simple and economic reading devices. In this way, many users will be able to offer the duplicating service, while only having the reading device and sending a digital code of the key, transponder or remote control to the cutting and engraving center, through a remote server, where the duplicating device is available.

This invention greatly reduces investment while making duplicating machines more efficient, as these will be constantly duplicating keys, transponders and remote controls of different users.

### BACKGROUND OF THE INVENTION

Currently, the duplication of keys and other lock opening elements, such as transponders or remote controls, is carried out by means of independent machines that perform a first step in which they read the element that has to be copied, the subsequent step in which they process the information obtained during the reading stage and, the final step in which the element in question is duplicated.

There is a wide range of machines that carry out this process, the cost of which is generally high since they have optical recognition elements such as lasers, cameras, mechanical elements such as motors and cutting devices, electronic regulators, interfaces, protections, etc.

Lock opening mechanisms have varying levels of security, the technology associated to each one being what determines such security. Thus, flat keys, multi-point keys, tumbler lock keys, etc. that are generally used on the doors of houses and that have a mechanized mechanical code in the key, which enables the lock to be opened, are very well-known.

There are other types of lock opening devices such as keys used in the automotive field and high security keys for houses, which in addition to the mechanical code, have a radio frequency (RF) transponder chip in the head of the key, which emits a code when it is excited. Current technologies enable this code to be read and these transponder chips to be copied.

The state of the art also has lock opening devices that, in addition to the mechanical code and the transponder chip, have a third element such as a frequency remote control for opening car doors, garages, etc. and which use technology that is different to conventional transponders. Current technologies enable the transmission code of a frequency remote control to be read and for it to be copied into a compatible transmitter.

Currently, when an end customer goes to a user (hardware store-key duplicating shop) the copy of the lock opening device, i.e. the key, is carried out at that same time and by means of techniques that can take a variable amount of time. On the one hand, this requires the user to have all the necessary machines in order to be able to carry out the duplicating operation (reader /copier) and on the other hand, they must also have a stock of blank lock opening elements on hand that are compatible with the lock opening device that has to be duplicated.

Generally, when copying high security lock opening devices, such as original keys with a card code (cards with proof of ownership of the key) it becomes necessary to have costly duplicating machines. Furthermore, when these shops have more than one point of sale in the same or in different cities, they must have the duplicating machines as well as a stock of all the key models at each point of sale.

Thus, current duplicating systems for lock opening devices are inefficient and expensive.

### DESCRIPTION OF THE INVENTION

With the aim of solving the aforementioned problems, the present document describes a system and a method for duplicating lock opening elements that generates digital codes of opening means (mechanical bitting, transmission codes, RF codes. etc.) of the opening elements in reading devices. These digital codes are stored in remote servers where they remain accessible for copying or duplicating operations, in a remote manner and at any time (not necessarily when it reads the lock opening element) in duplicating devices. In addition, a novel management of the digital codes stored in the remote server by the users has been provided.

Thus, a first object of the invention is a system for duplicating lock opening elements comprising:
- at least one reading device of the opening means of the opening element comprising a processor configured to generate a digital code of the opening means and means of communication with a remote server for sending the generated digital code to the remote server;
- the remote server in which the digital codes are stored; and
- at least one duplicating device of the opening element configured to receive the digital codes from the remote server through means of communication with the remote server and to duplicate each opening element based on the corresponding digital code received.

Both the reading devices and the duplicating devices are conventional devices.

The remote server used to store the digital codes can be a single server or various servers working jointly to provide a cloud service on the Internet. The codes stored therein refer to mechanical and electronic information that a house key, a car key or any other lock opening element, whether mechanic, electric or electronic, may carry or store. As it is stored in the cloud, the information remains accessible so that the user can share it or it can be accessed by other users or by the same user from a different location from where the reading was made.

In a preferred embodiment of the invention, the lock opening elements are selected among a key, a transponder and a remote control. However, any element designed for opening any type of lock and that therefore is equipped with mechanical, electric or electronic opening means and that in addition can be duplicated in conventional duplicating, copying or cloning machines would fall within the scope of the present invention.

In another preferred embodiment of the invention, the digital code of the opening means generated in the reading device comprises a model of the opening means, to use a similar or compatible element in the duplicating operation, and an opening code of the opening means. The model of the opening means is selected among a key model or reference, a transponder model or reference and a remote control model or reference. In turn, the opening code of the opening means is selected between a digital code of the mechanical bitting of the key, a digital chip code of the transponder and a digital transmission code of the remote control.

In the case of keys for locks, the model and opening codes thereof are usually defined in different ways. One of these is by means of reading machines provided with one or more cameras that take pictures of the key. By analyzing the pictures and comparing them with a database that has pictures of all the existing models, the model in question is identified and a profile of the bitting is extracted. This can also be done with a mechanical probe that probes the surface and extracts values from the surface of the key, enabling the key model that is to be used to be compared and identified. Nevertheless, in most cases the user identifies the model by looking at the brand of the lock or the key, the car model and year, etc., and looking at or comparing with pictures in a catalog. The reading method used by the machines is usually by means of electrical contact, which detects the different points, by laser barrier detecting the vertices of the key (detecting the points of the bitting) or also by taking a picture, which enables the vertices to be analyzed and the height of the bitting to be extracted. There are pluralities of keys (multi-point keys, flat keys, tumbler lock keys, cylindrical keys) so reading systems may differ according to the model.

In the case of transponders, aside from mechanical locks, keys with a greater degree of security usually incorporate a chip (transponder) inside the plastic head, which emits a digital code when it is excited. These chips have an antenna, which, when they receive a 125KHz or 134Khz wave, usually start emitting a code or message. This code is analyzed to find out the model of the chip and the opening code that it transmits. Normally the message header includes the model and the rest of the message incorporates the personal digital code of each chip. This technology is used in car keys, identifiers for clothing, food, etc.

For remote control devices, the reading is carried out in two stages: firstly, a synthesizer or frequency meter is used to search for the transmission frequency of the device. Secondly, the transmitted digital code is read as in the case of transponders but the antenna is tuned to the previously located frequency. Once this code is analyzed and it is revealed as being fixed or evolving, together with the previously located transmission frequency, the model of the required remote control is established and the opening code obtained is stored.

In another preferred embodiment of the invention, the remote server comprises a memory in which the digital codes of the opening elements are stored, each digital code being associated with an identifier of the opening element. In this way, by having the identifier, the digital code associated with the same can be accessed for download in the duplicating devices. The identifier can be associated to the end customer, the user (a shop, hardware store, etc.) or both.

In another preferred embodiment of the invention, the reading devices of the opening elements comprise means for recognizing the mechanical bitting of the key, capacitors for decrypting a key code, elements for reading a transponder code, RF transponder reading antennas and antennas for reading a remote control transmission code.

In another preferred embodiment of the invention, the system is provided with external electronic devices such as mobiles phones, tablets, computers, etc. having means of communication with the remote server and with the reading and duplicating devices, wherein the external electronic devices are configured to receive the digital codes of the reading devices and send them to the remote server and to receive the digital codes from the remote server and send them to the duplicating devices.

In another preferred embodiment of the invention, the means of communication of the reading and duplicating devices with the remote server and the means of communication of the external electronic devices with the remote server and with the reading and duplicating devices are means of connection to the Internet. More preferably, this connection to the Internet is selected among a WI-FI connection, a telephone data connection, a wired connection and a combination of any of the foregoing. Thus, the reading and duplicating devices may have means of connection, such as 3G, 4G, Wi-Fi, Bluetooth, and wired connection with the external electronic device and in turn, the external electronic device may have wireless means of communication, such as 3G, 4G, Wi-Fi, etc. with the remote server. In this way, the information read on the reading device would pass on to the electronic device and from there to the remote server through the Internet. Similarly, the electronic device would receive the digital codes from the remote server and these would subsequently be transferred to the duplicating device.

In another preferred embodiment of the invention, each reading device comprises an encoder for encoding the generated digital codes and each duplicating device comprises a decoder for decoding the encoded digital codes received from the remote server.

In another preferred embodiment of the invention, the external electronic devices comprise an internal memory that stores a list of opening element models in order to identify the opening element that has been read. In this way, the external electronic devices generate the digital code by processing the information relative to the model of the opening element and the opening code that was read, and they send it directly to the remote server where it is stored.

Preferably, it is envisaged that the system comprises a large number of reading devices and a reduced number of duplicating devices. Since the cost of duplicating devices is considerably higher than the cost of reading devices, the distributed system described in the present invention achieves a much cheaper and efficient duplicating system than current duplicating systems, in which the machines include both the means of reading and duplicating keys, transponders and/or remote controls.

The reading devices used may be of a different nature and among them there are:
- recognition devices for keys and mechanical bitting: devices with viewing cameras and an internal database capable of identifying the key model introduced into the device and a capacitor for decoding the key code;
- devices for reading the digital transponder code: usually an antenna that reads the transponder code through RF.
- devices for reading car key and garage remote control codes, also having an antenna for reading remote control security codes.

A second object of the present invention is the method for duplicating lock opening elements, which uses the system described above. Said method comprises the following steps:
- introducing an opening element into the reading device;
- generating a digital code corresponding to the opening means of the opening element by means of the processor of the reading device;
- sending the generated digital code to the remote server where it is stored;
- downloading the digital code into the duplicating device from the remote server; and,
- duplicating the opening element in the duplicating device from the downloaded digital code.

In a preferred embodiment of the method, sending the generated digital code to the remote server and downloading the digital code into the duplicating device from the remote server is performed through the external electronic devices.

In another preferred embodiment of the method, an identifier of the opening element is generated in the processor of the reading device, which is sent to the remote server together with the digital code of the opening means, storing the digital code associated with the identifier of the corresponding opening element. In this way, by having an identifier, the digital code associated to the same can be accessed in order to be downloaded into the duplicating devices. The access to digital codes by means of searches in the server by date of creation of the digital codes, customers, etc., has also been provided.

In another preferred embodiment of the method, the generated digital code is encoded in the reading device and is decoded once downloaded into the duplicating device. This increases the security of the system since only the authorized duplicating device has the codecs to decode certain increased security keys.

In another preferred embodiment of the method, authorizations are assigned to certain users enabling said users to access the digital codes stored in the remote server according to the assigned authorizations. Preferably, the assignment of authorizations to users has been provided as either administrator user, with full access to the information stored on the remote server, or as a guest user, with limited access to the information stored on the remote server.

Furthermore, an object of the present invention is a computer-readable means that stores a computer program which, when loaded into the external electronic devices, configures the external electronic devices in order to manage the method described above. Preferably, the computer program is an application, which is installed in electronic devices (smartphones, tablets, laptops or personal computers) and is responsible for communicating with the remote server, the reading devices and the duplicators in order to exchange information regarding: model of the key to be used, the mechanical bitting code of the key being read, the transponder model, the digital transponder code, if it exists, and also the remote control code and the model or type of control, if it was read. All these different reading devices transmit the code (either mechanical or electronic) related to the element that is being read to the application. This means that the application has all the necessary information in order to be able to duplicate or clone all this information onto another element compatible with the one that has been read.

Thus, the method and system object of the invention has the advantage that the user (shop, hardware store, etc.) does not need to have machines that integrate both the reading and the duplicating means, as well as duplicating material (blank keys, remote controls and transponders) at each sale point, but rather it can share the information acquired in the shops that only have reading devices so that the shops that have the duplicating machines for keys, transponders and remote controls can remotely carry out the duplication. These duplicate keys could then subsequently be sent to the original shop where the reading was carried out or to any other point of sale or even to the end customer. The method and system object of the present invention will entail that the shops have to have devices capable of reading the aforementioned opening means, such as the key model, the mechanical code of the key, the digital code of the transponder or the internal code of the remote control. However, these devices are less costly than the electronic cutting machines used for duplicating opening elements.

Therefore, the use of a remote server that allows the acquired information to be shared enables the user to provide complete service in all of its shops, without having to make large investments in each point of sale. The present invention would also allow different users that are geographically separated to access the same cloud area in order to share the stored information and thus also share the required duplication tasks.

### BRIEF DESCRIPTION OF THE FIGURES

As a complement to the description provided herein, and for the purpose of helping to make the characteristics of the invention more readily understandable, a set of drawings is attached as an integral part of said description, which, by way of illustration and not limitation represent the following:
Figure 1. - Shows a schematic view of the main elements that make up a particular embodiment of the system object of the present invention.
Figures 2 and 3. - Show a particular embodiment of the organization of the information stored in the remote server of the system of the present invention.
Figures 4 and 5. - Show flow diagrams of a particular embodiment of the method object of the present invention.

### DESCRIPTION OF SEVERAL EXEMPLARY EMBODIMENTS OF THE INVENTION

A description of several exemplary embodiments of the invention follows, by way of illustration and not limitation, referring to the numbers provided in the figures.

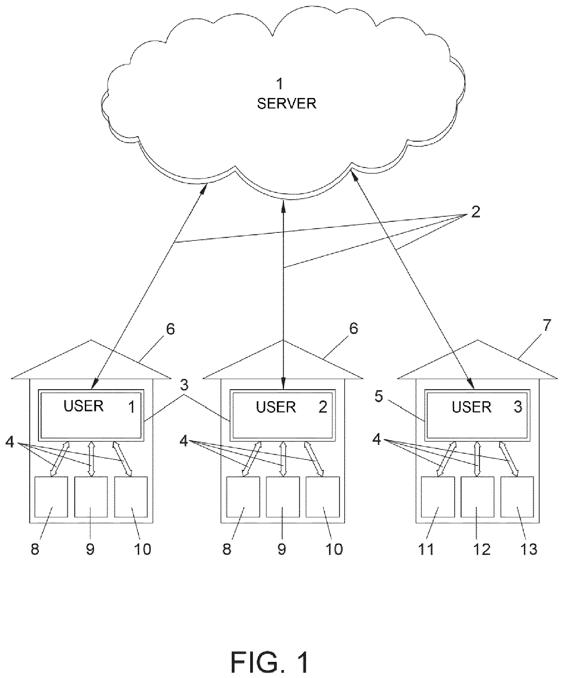

Figure 1 shows a schematic view of a particular embodiment of the system object of the invention. It also shows by means of arrows the flow of information between the different elements of the system. Specifically, it shows a remote server (cloud) (1) connected via the Internet (2) with electronic tablets (3) located at two points of sale (6) and with another electronic tablet (5) located at a manufacturing point (7). Specifically, the two points of sale (6) have three reading machines (8,9,10), a first machine for reading keys (8), a second machine for reading the codes of the transponders (9) and a third machine for reading the codes of remote controls (10). The manufacturing point (7) has three duplicating machines (11,12,13), a first machine for duplicating keys (11), a second machine for duplicating transponders (12) and a third machine for duplicating remote controls (13). However, the technology required for reading keys, transponders and remote controls could be integrated into a single machine and duplicating technology could also be integrated into a single machine. Optionally, both the points of sale and the manufacturing points could have reading and/or duplicating machines available indistinctly.

The remote server (1) shall have means of protection and shall be encrypted against unauthorized access.

The connections to the Internet (2) between the remote server (1) and the tablets (3,5) shall be Internet connections via WI-FI, although it could consist of another type of technology depending on the type of electronic device used. These tablets (3,5) shall have an application installed that is specifically designed to be able to communicate with the remote server (1) and the reading machines (8,9,10) and the duplicating machines (11,12,13). The means of connection (2) of the application with the remote server (1) shall be transparent to the application and shall use different technologies, such as for example, telephone data transmission, 3G, 4G, WI-FI, Bluetooth and DSL wired network, wired, etc. The data connection used shall be encrypted at all times so that the transmitted data is protected and unreadable by third parties who might be analyzing the means of transmission of the application in the cloud (1).

The tablet (5) shall use the application to interact with the remote server (1) and with the different machines or duplicating devices (11,12,13) of the hardware store (7), which may be electronic machines for cutting keys, transponder duplicating and cloning machines, copying machines for remote controls, etc. This application has an integrated database where the following information is stored: different models of opening elements, searches of the opening elements carried out previously, technical duplicating information for each opening element, and opening element codes. It also stores instructions for managing the manufactured opening elements and links to the user's end customers. Thus, the opening elements manufactured can be assigned to the corresponding customers so that, in the future, copies of the same opening elements can be made for the customer without needing to have them on hand at that time (copy of original opening element), since all the duplicating information for the new opening element is stored in this database.

In turn, the tablets (3) of the points of sale (6) have means of connection (4) of the application with the different reading machines (8,9,10). The means of connection in this case may also be a wireless Bluetooth connection, Wi-Fi, or different wired transmissions such as Ethernet, USB, RS-232 communication port, or a specific wire manufactured to communicate the application installed in a mobile device or a personal computer, using a port that is wired to an input port of the reading machine.

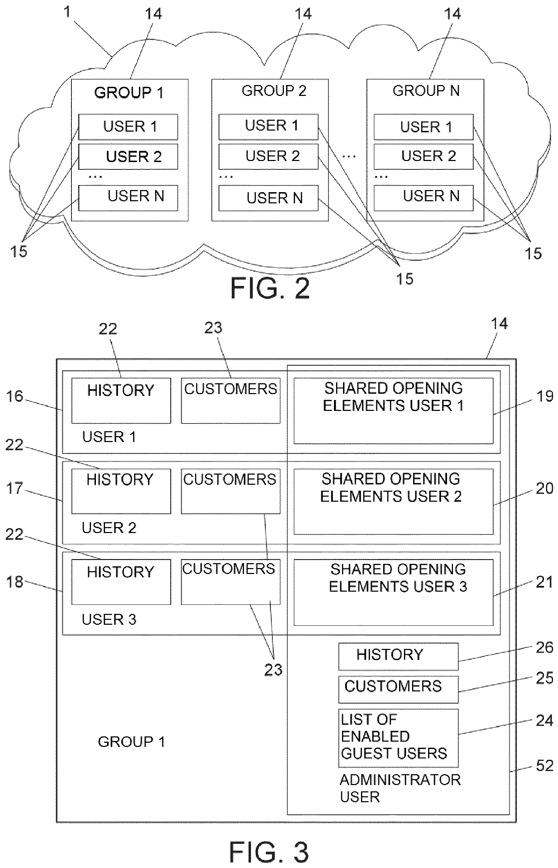

Figure 2 shows a specific embodiment of the remote server (1) wherein said remote server (1) is a structured database in which the stored information is organized as follows: firstly, the database memory shall be divided into groups (14), which for example could correspond to hardware store chains, where each group (14) shall in turn be formed by all the users (15) (shops, hardware stores, etc.) that belong to each hardware store chain, differing among them by the user name (user 1, user 2,... user N) indicated in the registration phase of the same through the application. For example, "Group 1" could belong to a chain of hardware stores distributed throughout Spain, where the users of said "Group 1" would be "Madrid hardware store", "Barcelona hardware store", "Bilbao hardware store", etc.

The first user to sign up through the application is the one that generates a new group and automatically becomes group administrator user (52). The other users will be guest users. In addition, the user/administrator can convert a guest user into an administrator user, for example, in the event that there is a guest user who has a copying machine in their store.

Figure 3 shows a detailed embodiment of how the information is structured within each group (14). Specifically, it shows a "Group 1" (14) where the administrator user (52) has enabled three guest users (16,17,18). The guest users (16,17,18) can share the opening elements read in their business establishment so that once they have been uploaded to the shared area, the administrator user (52) can access the pending duplication requests and duplicate the opening elements in his business establishment. Each guest user (16,17,18) is notified, for their records, when the uploaded copy request has been read.

Each guest user (16,17,18) only sees the opening elements they have shared (19,20,21) and cannot see the opening elements of other guest users, while the administrator user (52) is able to see all the opening elements shared (19,20,21) by guest users (16,17,18). Shared opening element is understood as those server registers that refer to the digital codes of the opening means of the opening elements. Likewise, a "request status" field is also stored which is used in order to avoid making two copies of the same opening element, informing the guest user that the requested opening element is being copied and in the event that two administrator users exist, as soon as the request is read, it cannot be read again by the other administrator.

Each guest user (16,17,18) stores the data of its end customers (23) for which it makes opening elements and also the history (22) of opening elements (data of the opening elements) that are manufactured for each customer. This part of the customer (23) database and the history (22) of opening elements for each customer is private information belonging to each guest user and the other guest users do not have access to said information, except when an application for said information has been approved by the administrator.

The administrator user (52) stores a list of enabled guest users (24) as well as a duplicating history of opening elements (26) and customers (25) (the administrator user can also act as a guest user in relation to making copies of opening elements).

The cloud also has a backup of all the information so that in the future, if the user needs to change their Smartphone, tablet or PC, they can synchronize this information, since users use the same user name and password to access previously stored information.

In this way, it is always possible to have copies of the original opening element, in other words, instead of having to make a copy of the copy of the original opening element, which in the long run makes the copy inaccurate and causes the copied opening element not to work properly, since the data is stored, it always makes a copy of the original opening element. Another advantage is that if, for example, you lose your car key and you are outside your community of residence, you can go to a user that belongs to the group and, by supplying your personal data, it can provide you with a copy of said key.

Two exemplary embodiments of the system and method object of the present invention are described here below.

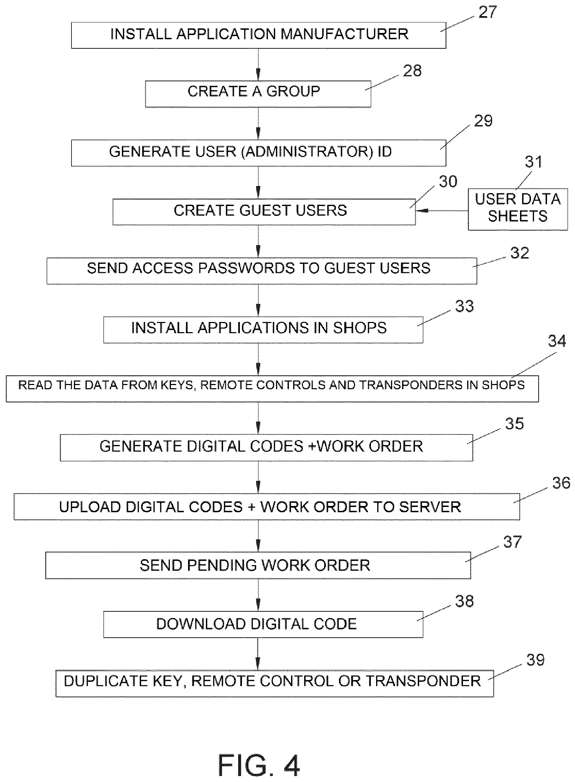

In a first exemplary embodiment, the user is a manufacturer/distributor who has all the material for duplicating opening elements in its warehouse or factory, including reading and duplicating machines and all kinds of keys, remote controls and transponders. Figure 4 shows the flow diagram of the steps in the duplicating process of a key, remote control or transponder for this exemplary embodiment. In this case, the application (27) is installed in a mobile device or PC, through which the manufacturer creates a group (28) in the server, assigning a name and an access password to the group. In addition, it will generate the user ID (29), which, in this case, as it is also the group creator, would automatically be created as administrator, also assigning a password as administrator user.

Once the group is created, it will create different guest users (30) with their corresponding access passwords. Optionally, each user shall be assigned a data sheet (31) with user data such as name, address, telephone, post code, etc. These users are assigned certain authorizations such that they may take on the category of guest users or administrators. Depending on the assigned authorizations, the users shall have access to certain information stored in the cloud.

Thus the administrator user who created the group generates different guest users corresponding to the manufacturer's points of sale. Subsequently, the IDs of the guest users together with their corresponding access passwords are sent (32) to the different shops that correspond to the users. Thus, these guest users, upon installing the application (33) in their corresponding mobile devices or PCs, can access the group of the remote server by each identifying themselves with their corresponding user and password. In this way, the shops of the distributor that are guest users can read the data from keys, remote controls or transponders (34) by using simple low-cost reading machines in order to generate (35) the corresponding digital codes and upload (36) them to the cloud with a work order request.

The manufacturer is notified (37) from the server through the application that a work order has arrived. The manufacturer downloads the digital code (38) of the corresponding key, remote control or transponder and, since it has all the duplicating machinery, keys, remote controls and transponders available, it duplicates (39) the key, remote control or transponder using the information previously stored by the guest user. Since the user ID is stored in the remote server together with the digital code of the key, remote control or transponder, the administrator knows which store the key, remote control or transponder must be sent to. Optionally, the end customer's data can also be stored together with each digital code of the keys, remote controls or transponders, so that the administrator can send the key, remote control or transponder directly to the end customer's home.

Given that there may be multiple administrator users, the system has provided that when a digital code of a key, remote control of transponder shared by a guest user is downloaded, it also records that the associated work order has already been processed by the administrator who has downloaded the code so that the user who has shared it is notified that its work order is being processed, and so that the rest of administrator users are aware that the work has already been carried out.

Thanks to this system, the initial administrator also obtains information on the management of its shops, knowing which users are the ones that request the greatest amount of copies. Information is also obtained on the most popular keys, remote controls and transponders in order to control their warehouse stocks.

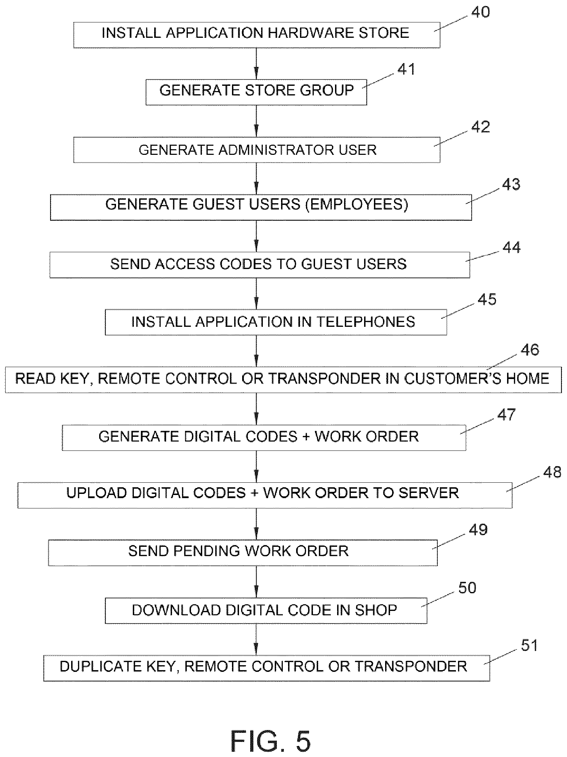

In a second exemplary embodiment, the user is a hardware store. Figure 5 shows the flow diagram of the steps of the duplicating process of a key, remote control or transponder for this exemplary embodiment. In this case, the hardware store has the reading and duplicating machines in the main store and the installed application (40) in a mobile device or PC that is located in the store itself.

Thus, the hardware store owner generates a store group (41) in which it will be the administrator user (42) and additionally generates guest users (43) (employees) with their respective access codes (44). The employees shall install the application (45) in mobile devices (telephones or tablets) so that it can be used during their technical assistance visits (private homes, etc.). Usually, when they have to repair a door, garage or car, the hardware dealer or a store employee has to visit the customer's home.

In this case, the employee shall take along a reading machine and the mobile device with the installed application in his assistance vehicle, and since he is a registered guest user, he will have sufficient tools at the customer's home in order to read the key, remote control or transponder (46) that needs duplicating, generate the corresponding digital code along with the work order (47) and share it with the group (48) created by the hardware store owner. At the hardware store, once the notification of pending work (49) has been received, they can access as administrator user the digital code of the key, remote control or transponder (50), which was remotely read by the employee, and duplicate the key, remote control or transponder (51). In this way, the customer can receive a copy of the key, remote control or transponder without having to return to the store with the original key, remote control or transponder in order to duplicate it.

Any of the previously described examples have provided that the guest users can send digital codes of keys, transponders and remote controls to the remote server and that they can also view the history of stored codes corresponding to the groups to which they have access. Moreover, administrator users can also view the digital codes stored in the groups relative to all the business establishments of a single chain or owner, as well as carry out the management of duplicating/engraving tasks.

## Claims

1. A system for duplicating lock opening elements, **characterized in that** it comprises:
- at least one reading device of opening means of the opening element comprising a processor configured to generate a digital code of the opening means and means of communication with a remote server for sending the generated digital code to the remote server;
- the remote server in which the digital codes are stored; and
- at least one duplicating device of the opening element configured to receive the digital codes from the remote server through means of communication with the remote server and to duplicate each opening element based on the corresponding digital code received.

2. The system for duplicating lock opening elements according to claim 1, wherein the lock opening elements are selected among a key, a transponder and a remote control.

3. The system for duplicating lock opening elements according to claim 1, wherein the digital code of the opening means generated in the reading device comprises a model of the opening element and an opening code of the opening element.

4. The system for duplicating lock opening elements according to claims 2 and 3, wherein the opening code of the opening element is selected between a mechanical bitting code of the key, a coded RF signal of a transponder chip and a transmission code of the remote control.

5. The system for duplicating lock opening elements according to claim 1, wherein the remote server comprises a memory in which the digital codes of the opening elements are stored, each digital code being associated with an identifier of the opening element.

6. The system for duplicating lock opening elements according to claim 4, wherein the reading devices comprise means for recognizing the mechanical bitting of the key, capacitors for decrypting a key code, elements for reading the coded RF signal of transponder, RF transponder reading antennas and antennas for reading a remote control transmission code.

7. The system for duplicating lock opening elements according to any one of the preceding claims, comprising external electronic devices having means of communication with the remote server and with the reading and duplicating devices, wherein the external electronic devices are configured to receive the digital codes of the reading devices and send them to the remote server and to receive the digital codes from the remote server and send them to the duplicating devices.

8. The system for duplicating lock opening elements according to claim 7, wherein the means of communication of the external electronic devices with the remote server are means of connection to the Internet.

9. The system for duplicating lock opening elements according to claim 7, wherein the means of communication of the external electronic devices with the reading and duplicating devices are selected among wired means and wireless means of connection to the Internet.

10. The system for duplicating lock opening elements according to any one of the preceding claims, wherein the external electronic devices comprise an internal memory that stores a list of models of opening elements in order to identify the opening element that has been read.

11. A method for duplicating lock opening elements which uses the system described in any one of claims 1 to 10, wherein the method comprises:
- introducing an opening element into the reading device;
- generating a digital code corresponding to the opening means of the opening element by means of the processor of the reading device;
- sending the generated digital code to the remote server where it is stored;
- downloading the digital code into the duplicating device from the remote server; and,
- duplicating the opening element in the duplicating device.

12. The method for duplicating lock opening elements according to claim 11, wherein sending the generated digital code to the remote server and downloading the digital code into the duplicating device is performed through the external electronic devices.

13. The method for duplicating lock opening elements according to claim 11, wherein an identifier of the opening element is generated in the processor of the reading device, which is sent to the remote server together with the digital code of the opening means, storing the digital code associated with the identifier of the corresponding opening element.

14. The method for duplicating lock opening elements according to claim 11, wherein the method assigns authorizations to users enabling the users to access the digital codes stored in the remote server according to the assigned authorizations.

15. A computer-readable means that stores a computer program which, when loaded into the external electronic devices, configures the external electronic devices in order to manage the method described in any one of claims 11 to 14.
